# EUROPÄISCHE PATENTSCHRIFT

(11) **EP 3 956 204 B1**
(45) Veröffentlichungstag und Bekanntmachung des Hinweises auf die Patenterteilung: **07.06.2023**
(21) Anmeldenummer: 20742208.0
(22) Anmeldetag: 13.07.2020
(51) Int. Cl.: B62D 35/00

(54) **KFZ-BAUGRUPPE UMFASSEND EIN MITTELS MINDESTENS EINES LÄNGENVERSTELLBAREN DISTANZHALTERS AN EINEM HALTETEIL BEFESTIGTES ANBAUTEIL**
MOTOR VEHICLE ASSEMBLY COMPRISING AN ATTACHMENT WHICH IS SECURED TO A HOLDING PART BY MEANS OF AT LEAST ONE SPACER WITH AN ADJUSTABLE LENGTH
MODULE DE VÉHICULE À MOTEUR COMPRENANT UN COMPOSANT RAPPORTÉ FIXÉ SUR UNE PARTIE DE MAINTIEN AU MOYEN D'AU MOINS UN ÉCARTEUR À LONGUEUR AJUSTABLE

(30) Priorität: 12.07.2019 DE 202019103855 U
(43) Veröffentlichungstag der Anmeldung: 23.02.2022
(73) Patentinhaber: Montaplast GmbH, 51590 Morsbach (DE)
(72) Erfinder: SCHNELL, Maik, 57537 Wissen (DE); REX, Martin, 51570 Windeck (DE)
(74) Vertreter: Wagner Albiger & Partner Patentanwälte mbB
(86) Internationale Anmeldenummer: PCT/EP2020/069770
(87) Internationale Veröffentlichungsnummer: WO 2021/009127

(56) Entgegenhaltungen:
- DE-A1- 10 235 702
- DE-A1-102009 034 518
- DE-A1-102011 009 585
- FR-A1- 2 927 303

## Beschreibung

Die Erfindung betrifft einen Distanzhalter für eine KFZ-Baugruppe nach dem Oberbegriff von Anspruch 1, also eine KFZ-Baugruppe umfassend ein als Halte- oder Montagekörper fungierendes, im Wesentlichen stationäres Halteteil eines KFZ, z.B. eine Karosserie, ein Motor oder dergleichen, ein relativbeweglich im Verhältnis zu dem Halteteil angeordnetes Anbauteil sowie mindestens einen sich zwischen dem Halteteil und dem Anbauteil erstreckenden Distanzhalter zur Befestigung des Anbauteils an dem Halteteil.

Der Distanzhalter fixiert das Anbauteil in einer definierten Grundstellung beabstandet zu dem Halteteil. Durch eine Krafteinwirkung, z.B. einen Aufprall im Rahmen eines Unfalls kann das Anbauteil in eine von der Grundstellung verschiedene Auslenkung überführt werden, die näher an dem stationären Halteteil gelegen ist.

Der mindestens eine Distanzhalter umfasst mindestens zwei zueinander relativ bewegliche Distanzhalterteile, nämlich einen in Einbaulage innenliegendes Distanzhalterinnenteil ausgebildet zur Befestigung an dem Halteteil sowie ein in Einbaulage außen gelegenes Distanzhalteraußenteil ausgebildet zur Befestigung an dem Anbauteil. Die Distanzhalterteile sind entlang einer gemeinsamen Distanzhalterlängsachse, die vorzugsweise ausgebildet ist als Linienführung im Verhältnis zueinander verstellbar. Ferner kann zwischen den Distanzhalterteilen eine Rückstellfeder angeordnet sein, welche nach der Krafteinwirkung der Auslenkung entgegenwirkt.

Solche Kfz-Baugruppen bzw. Kfz-Anordnungen umfassen also das Anbauteil, welches in einer Sollposition in Ruhelage bzw. Grundstellung beabstandet von einem stationären Bauteil angeordnet ist und in dieser Grundstellung über den längenverstellbaren Distanzhalter, vorzugsweise mehreren längenverstellbaren Distanzhaltern gehalten wird. Ein besonderer Anwendungsfall derartiger Anbauteile ist ein Rahmen zur Aufnahme von Luftklappen, also eine Luftführung oder ein Luftführungselement, welches eine Vorderfläche definiert, welche mittels verstellbarer Klappen öffnenbar und verschließbar ist zur Regulierung der Luftzuführung und für das Thermomanagement in einem Motorraum. Üblicherweise sitzt ein derartiger Luftklappenhalter bzw. ein derartiger Rahmen hinter dem "Maul" am vorderen Ende eines Kraftfahrzeuges und bildet somit den vorderen Lufteinlass zum Motorraum.

Normalerweise ist der Distanzhalter an einem innenseitigen Ende mit dem stationären Bauteil, z.B. dem Motor oder der Karosserie verbunden und an einem außenseitigen Ende mit dem Anbauteil, also z.B. dem Rahmen bzw. der Luftklappensteuerung.

Die Distanzhalterteile, also das Distanzhalterinnenteil und das Distanzhalteraußenteil sind entlang einer gemeinsamen Distanzhalterlängsachse im Verhältnis zueinander verstellbar und ermöglichen somit bei Krafteinwirkung, z.B. bei einem Unfall, ein möglichst definiertes Verstellen des Anbauteils im Verhältnis zu dem stationären Bauteil. Somit wird eine nachgebende Funktion bei Relativbewegung zwischen den Bauteilen im Crashfall realisiert.

Ein Distanzhalter anderer Art mit einem Fluid-Feder-System ist bekannt aus DE 103 32 377 A1. Ein Distanzhalter ohne Feder ohne Feder ist offenbart in US 2018/0327032 A1.

### Nachteile am Stand der Technik

Mitunter ist auch eine Rückstellfeder zwischen den beiden Distanzhalterteilen vorzusehen, welche eine Rückstellung nach dem Aufprall bzw. Crash realisieren soll. Die Rückstellfeder wirkt jedoch seitlich von der Linienführung zwischen den beiden Distanzhalterteilen, also achsversetzt von der Distanzhalterlängsachse und den sich relativ zueinander bewegenden Distanzhalterteilen, womit die Rückstellfeder ein Drehmoment auf die vorzugsweise als Schwalbenschwanzführung zwischen den Distanzhalterteilen ausgebildete Linienführung ausübt, was die Funktionsfähigkeit negativ beeinflussen kann.

Auch ein Verschmutzen der Distanzhalter kann die Funktion, also die Relativbewegung negativ beeinflussen.

Der Distanzhalter bzw. die durch diesen gebildete KFZ-Baugruppe kann z.B. bei Vibrationen seine Ruhelage verlieren, weil die Feder in Schwingung gerät.

Durch den Verbau innerhalb des Motorraums sind die Führungen einer unvermeidbaren Verschmutzung ausgesetzt, was im Extremfall zu einem Verklemmen führen kann, was bis zu einer vollständigen Fehlfunktion führen kann, sodass die Distanzhalterteile die notwendige Relativbewegung nicht ausführen können.

Schließlich bedarf die komplexe Bauweise bestehender Lösungen eine genaue Abstimmung der Bauteile aufeinander, weil die Ortsveränderung aus der Grundstellung durch einen Aufprall, z.B. bei einem Unfall, in dem Rahmen oder der Luftführung angeordnete Sensoren aus der definierten Solleinbaulage verstellt werden.

### Aufgabe

Ausgehend von dem eingangs genannten Stand der Technik und der damit verbundenen Nachteile liegt der Erfindung die Aufgabe zugrunde, diese Nachteile zumindest teilweise zu vermeiden und insbesondere eine einfache, verlässliche und möglichst wartungsfreie Rückstellung in die Grundstellung zu ermöglichen.

### Lösung/Erfindung

Erfindungsgemäß wird diese Aufgabe bereits durch die Merkmale der unabhängigen Ansprüche gelöst. Vorteilhafte, aber nicht zwingende Weiterentwicklungen sind in den Unteransprüchen wiedergegeben.

Erfindungsgemäß wird diese Aufgabe somit dadurch gelöst, dass die Distanzhalterteile teleskopartig ineinandergreifen, also jeweils ein erstes Distanzhalterteil durch das komplementäre zweite Distanzhalterteil relativbeweglich entlang der gemeinsamen Distanzhalterlängsachse konzentrisch erstreckend aufnimmt. Die beiden Distanzhalterteile sind also koaxial, also konzentrisch zueinander angeordnet und die Rückstellfeder ist zwischen diesen Distanzhalterteilen aufgenommen zur Bildung eines geschlossenen, teleskopartig längenverstellbaren Federsystems, wobei die Distanzhalterteile die mindestens eine Feder umschließen, also in sich aufnehmen. Die Distanzhalterteile sind also koaxial entlang der Distanzhalterlängsachse bzw. mehrerer Distanzhalterlängsachsen angeordnet und nehmen zwischen sich die mindestens eine Rückstellfeder auf. Damit schützen die Distanzhalterteile die Rückstellfeder vor Schmutz, schirmen diese also außenseitig ab.

Die Erfindung beruht auf dem Konzept, dass das System der Kraftwirkung in Linie und einer Führung angeordnet ist, die konzentrisch als "geschlossenes System" aufgebaut ist. So bilden die jeweils ein Distanzhalterinnen und ein Distanzhalterinnenteil umfassenden Distanzhalterteile ein teleskopische ausgebildetes, geschlossenes System zur Aufnahme der Druckfedern.

Diese Lösung mit den innenseitig aufgenommenen Rückstellfedern erlaubt es, dass bei einem Unfall (Crash) das System automatisch in die Grundstellung zurückversetzt wird, ohne dass dafür die Werkstatt aufgesucht und Baugruppen ausgetauscht werden müssen.

Die konzentrische Führung verhindert zudem ein Verkanten und die zur Kraftwirkung ausgerichteten Rückstellfedern leiten die Kraft ohne Drehmomente weiter, weil diese ebenfalls konzentrisch in dem System aufgenommen sind.

Erfindungsgemäß können die Distanzhalterteile ausgebildet sein, um eine dämpfende Wirkung in Verbindung mit der Feder zu entfalten. Dieses kann durch entsprechende Gestaltung der Rückstellfeder oder aber auch der komplementär ausgebildeten und aneinander abgleitenden Fügeflächen der Distanzhalterteile erfolgen, z. B. durch konische Aufweitung der Fügeflächen in Fügerichtung beim Zusammendrücken im Crash-Fall.

Da die Rückstellfeder konzentrisch, also koaxial zur Distanzhalterlängsachse angeordnet ist, wird durch diese im Gegensatz zum Stand der Technik kein Drehmoment zwischen den Fixpunkten der Distanzhalterteile mit den Fügekörpern ausgeübt, also dem innenseitigen Halteteil am Distanzhalterinnenteil und dem außenseitigen Anbauteil an dem Distanzhalteraußenteil. Dieses vermeidet ein Verkanten der Distanzhalterteile und verbessert insofern die Funktionsfähigkeit und Lebensdauer.

Es ist auch möglich, nebeneinanderliegend zwei oder mehr-Rückstellfedern zur Bildung einer Federanordnung vorzusehen, die vorzugsweise äquidistant von der mittig zwischen den Federlängsachsen angeordnete Distanzhalterlängsachse angeordnet sind zur Vermeidung von ungewünschte Hebelarmen und einem damit bewirkten Verkanten.

Besonders bevorzugt ist das Distanzhalterinnenteil als Einsteckteil und das Distanzhalteraußenteil ist als Führungshülse bzw. Aufnahmeteil ausgebildet, in welches das Distanzhalterinnenteil einsteckbar ist. Das Distanzhalterinnenteil ist somit längsverschieblich in dem Distanzhalterau-βenteil aufgenommen.

Das Distanzhalterinnenteil ist bevorzugt zumindest teilweise zur Fixierung der mindestens einen Rückstellfeder ausgebildet, was insbesondere dadurch erfolgen kann, dass dieses zumindest teilweise zur Aufnahme dieser mindestens einen Rückstellfeder ausgebildet ist, also einen stutzenartigen Einsteck- oder Aufnahmeabschnitt aufweist, welcher die eine oder mehrere Rückstellfedern zumindest teilweise umschließt.

Zur Realisierung einer besonders harmonischen Kraftentfaltung und Optimierung des Bauraums, also Reduzierung des für die Rückstellfedern nötigen Raums, sehen bevorzugte Ausführungsformen mehrere in dem Distanzhalter aufgenommene Druck- bzw. Rückstellfedern zur Bildung von einer Federanordnung vor, insbesondere zwei äquidistant von der zentralen Mittellängsachse beabstandet angeordnete Rückstellfedern.

Bevorzugt sind Federanordnungen mit geraden Anzahlen von Rückstellfedern vorgesehen, die für einen harmonischen Kraftverlauf gleichmäßig beabstandet sind zu einer gemeinsamen Mittellängsachse, die vorzugsweise mittig im Verhältnis zu den Federlängsachsen der Rückstellfedern der Federanordnung angeordnet sind.

Bevorzugt umfasst die Federanordnung mindesten zwei Rückstellfedern nebeneinander, vorzugsweise so, dass die Mittellängsachsen der Rückstellfedern auf einer gemeinsamen Ebene liegen, insbesondere einer in Einbaulage sich horizontal erstreckenden Ebene.

Zur Vermeidung von Hebelarmen ist die Federanordnung vorzugsweise so ausgebildet, dass die Mittellängsachsen der Rückstellfedern äquidistant, also gleich beabstandet von einer sich zwischen diesen Mittellängsachsen der Rückstellfedern erstreckenden Mittelachse der Federanordnung angeordnet sind.

Es liegt auch im Rahmen der Erfindung Federanordnungen mit mehr als zwei Rückstellfedern vorzusehen.

Möglich ist z.B. die seitliche Anordnung am oberen Ende und unteren Ende eines als Luftklappensteuerung ausgebildeten Rahmens. Der Rahmen umschließt bzw. definiert in diesem Fall ein Fenster. In dem durch den Rahmen gebildeten Fenster sind mehrere, Jalousie-artig übereinander, angeodnete und verstellbare Luftsteuerklappen aufgenommen für die Regelung der Luftzufuhr zu einem hinter dem Rahmen gelegenen Motorraum.

Eine solche Luftklappensteuerung ist vorzugsweise im Wesentlichen rechteckig ausgebildet und in Längsrichtung erstreckend am Vorderende in einem Motorraum angeordnet. Vorzugsweise vier Distanzhalter sind zwischen den Ecken des Rahmens, also jeweils am oberen und unteren Ende des Rahmens, und dem hinter dem Rahmen angeordneten Motorraum angeordnet.

Jeder Distanzhalter umfasst eine Federanordnung mit zwei oder mehr Rückstellfedern.

Besonders bevorzugt ist die Ausbildung mit drei Rückstellfedern pro Distanzhalter, wobei zwei Rückstellfedern sich mit ihren Federlängsachsen auf einer in Einbaulage im Motor angeordneten Horizontalebene erstrecken und die dritte Rückstellfeder vorzugsweise vertikal versetzt nach unten oder nach oben im Verhältnis zu der jeweilig außenseitig an dem Rahmen angeordnete Rückstellfeder der in der Horizontalebene erstreckenden Rückstellfedern angeordnet ist.

Zur Vermeidung eines Herausfallens des Distanzhalterinnenteils aus dem Distanzhalteraußenteil kann zwischen den Distanzhalterteilen ein Anschlag ausgebildet sein. Dieser kann ferner ausgebildet sein, um die Kraft der Rückstellfeder oder Rückstellfedern in der Grundstellung aufzunehmen.

Bevorzugt ist das System so abgestimmt, dass die Rückstellfedern unbelastet sind oder ganz leicht unter Spannung stehen, wenn der Anschlag zwischen den teleskopisch wirkenden Distanzhalterteilen anliegt.

Durch den Anschlag zwischen den Distanzhalterteilen kann somit bewirkt werden, dass der Bolzen in der Grundstellung entlastet ist. Das System ist demnach vorzugsweise so ausgebildet, dass der Anschlag in der Grundstellung so anliegt, dass der Abstand des Anbauteils zum Halteteil über die Länge der mindestens einen Rückstellfeder bzw. Feder festgelegt bzw. definiert ist und der Anschlag die Kraft der Rückstellfeder(n) aufnimmt. Die Rückstellung in die Grundstellung erfolgt somit selbstständig und das Einrasten in die Grundstellung erfolgt durch die geometrische Gestaltung des Bolzens vorzugsweise mit geringerer Kraft als das Ausrasten. Ferner bietet diese Ausgestaltung den Vorteil, der Entlastung des Bolzens in der Grundstellung.

Bei einer bevorzugten Ausführungsform sind die ineinandergreifenden Fügeflächen der Distanzhalterteile dämpfend und/oder schwimmend ausgebildet. Unter schwimmend ist dabei zu verstehen, dass die Ausrastkraft durch den Aufprall überschritten wird, zum Auslösen des Systems führt und dann durch die Rückstellfeder selbstständig zurück in die Grundstellung geführt wird.

Eine Dämpfung kann durch die Rückstellfeder selbst oder zusätzlich z.B. durch Ausbildung einer Konizität an den komplementären Fügeflächen erzielt werden.

Bei der besonders bevorzugten Ausführungsform ist an den komplementären Distanzhalterteilen ein Crashhaltesystem ausgebildet, wobei an einem Distanzhalterteil eine Klammer bzw. Crash-Klammer ausgebildet ist, in welche ein an dem komplementären anderen Distanzhalterteil ausgebildeter Bolzen rastend eingreift. Dieser in der Grundstellung in der Klammer aufgenommene Bolzen ist bis zur Überschreitung einer Ausrastkraft in der Klammer fixiert. Erst nach Überschreiten der Ausrastkraft, welche einem definierten Aufprall entspricht, löst sich der Bolzen aus der Verrastung der Klammer und ermöglicht so die Relativbewegung der Distanzhalterteile entlang der Distanzhalterlängsachse zueinander. Bevorzugt beträgt diese Ausrastkraft bzw. definierte Kraft zwischen 300 bis 500 Newton. Damit umfasst der Distanzhalter vorzugsweise an einem Distanzhalterteil einen Bolzen, der in der Grundstellung in einer Klammer (Crash-Klammer) des komplementären anderen Fügepartners gehalten ist, welche bei einer Auslenkung des Anbauteils und der Wirkung der definierten Ausrastkraft des Bolzens aus der Klammer und somit das Auslenken des Anbauteils erlaubt.

Durch unterschiedliche geometrische Gestaltungen der komplementär ausgebildeten Klammern und Bolzen kann das Crash-System an verschiedene Ausrastkräfte angepasst werden. Dieses bietet den Vorteil, dass das bis zur Überschreitung der geforderten Ausrastkraft der Klammer, die Federrate der Rückstell- bzw. Druckfedern niedrig angesetzt werden kann, weil deren Federkraft nur für die Rückstellung in die Grundstellung benötigt wird.

Bevorzugt ist das Crash-System bzw. die Klammer ausgebildet, so dass diese eine höhere Ausrastkraft von ca. 300 bis 500 N als Widereinrastkraft (Rückstellen in die Ursprunglage) von ca. 40 bis 70, besonders bevorzugt 50 bis 60 Newton aufweist. Insbesondre kann dieses dadurch realisiert werden, dass zwischen der Klammer und dem Bolzen auf den aufeinander zu gerichteten Seiten Auflaufschrägen ausgebildet sind, die das Widereinrasten erleichtern.

Der Bolzen kann geometrisch angepasst sein zur Veränderung der Ausrastkraft (Kraft zum Lösen des Bolzens aus der Klammer) und der Einrastkraft (Kraft zum Wiedereinführen des Bolzens in die federnde Klammer). So kann dieser z.B. rund sein, aber auch leicht oval mit etwas abgeflachten Seiten oder mit in Fügerichtung mit der Klammer wirkenden Auflaufschrägen, welche das Wiedereinrasten vereinfachen bzw. die Kraft reduzieren. Grundsätzlich kann das Quermaß des Bolzens quer erstreckend zur Einrast- bzw. Ausrastrichtung geändert werden, um die Rastkraft bzw. Ausrastkraft zu verändern.

Durch die verwendete Klammer (Crash-Klammer) und ihrer geometrischen Gestaltung kann durch geometrisch unterschiedliche Ausgestaltung der Bolzen eine Abstimmung des Systems auf unterschiedlicher Ausrastkräfte realisiert werden. Beim Überschreiten der definierten Ausrastkraft der Klammer, bei welcher die Klammer also den Bolzen freigibt, kann die Federrate niedrig angesetzt werden. Die Federkraft der Druckfeder wird somit eigentlich nur für die Rückstellung in die Grundstellung benötigt, wohingegen aber für das Zurückstellen in die Ursprungslage, also das Aufnehmen des Bolzens in der Klammer eine geringere Kraft erforderlich sein kann. Bevorzugt wird dieses dadurch erreicht, dass an den Fügepartnern zwischen Klammer und Bolzen ineinandergreifende Schrägen bzw. Anlaufschrägen vorgesehen sind, die das Einschieben des Bolzens in die Klammer erleichtern, wohingegen das Auslösen zur Überwindung der Ausrastkraft die höhere Kraft erfordert. Die Ausrastkraft kann auch dadurch beeinflusst werden, dass die Klammer oder Eingriffsflächen der seitlichen, komplementären Schlitze des Bolzens eingreifen.

Bevorzugt ist die Klammer am Distanzhalteraußenteil ausgebildet und der Bolzen am Distanzhalterinnenteil, obwohl dieses selbstverständlich auch anders möglich ist.

Vorzugsweise sind Klammer und Bolzen einstückig an den Distanzhalterteilen ausgebildet, insbesondere einstückig angespritzt, können aber alternativ auch mit den Distanzhalterteilen verbunden, z.B. ein- oder aufgesteckt sein.

Bei einer stabilen Ausführungsform ist der Distanzhalter Bestandteil einer Distanzhalteranordnung mit mehreren, komplementären Distanzhalterteilen mit je einem Distanzhalterinnen- und einem korrespondierenden Distanzhalteraußenteil, die über eine Distanzhalterbrücke voneinander beabstandet und miteinander verbunden sind. Durch eine derartige Distanzhalterbrücke kann eine noch genauere Führung des Anbauteils beim Aufprall realisiert werden. Vorzugsweise sind die Distanzhalterteile in Einbaulage übereinander beabstandet angeordnet, sodass ein oberer Distanzhalter in Einbaulage über einem unteren Distanzhalter angeordnet ist und über die Distanzhalterbrücke miteinander verbunden sind. Bei der bevorzugten Ausführungsform ist die Distanzhalterbrücke bzw. die Distanzhalteranordnung als Kunststoffteil, besonders bevorzugt als Kunststoffspritzgussteil ausgebildet.

Bevorzugt umfasst die Distanzhalterbrücke jeweils zwei in Einbaulage obere Distanzhalterteile, die in Einbaulage beidseitig von dem Anbauteil oberhalb von unteren Distanzhalterteilen angeordnet sind.

Daneben betrifft die Erfindung ein Montagverfahren für eine KFZ-Baugruppe der zuvor beschriebenen Art. Eine besonders einfache Anordnung bzw. Montage des Anbauteils an dem Halteteil ist durch einfaches Einsetzen oder Einklappen realisierbar. Zu diesem Zweck können an dem in Einbaulage unten gelegenen Distanzhalterteilen mit dem Halteteil verbindbare Einsteckteile vorgesehen sein, insbesondere ausgebildet als nach unten vorstehende Bolzen (Einsteckbolzen), Schrauben oder dergleichen zum Einstecken in das Halteteil und am oberen Ende bzw. an den in Einbaulage oben gelegenen Distanzhalterinnenteilen ist ein Befestigungsauge bzw. eine Befestigungslasche ausgebildet, mit welchen das obere Distanzhalterinnenteil in Einbaulage auf das Halteteil aufschnappbar ist oder mit diesem verschraubbar ist. Durch diese einfache Ausgestaltung kann das Anbauteil mit den unteren Einsteckteilen bzw. mindestens einem Einsteckteil in das Halteteil eingesteckt werden, ggf. um diesen unteren Vorfixierungspunkt verschwenkt werden und sodann mit dem oberen Befestigungsauge bzw. dem oberen Distanzhalterinnenteil mit dem Halteteil in der endgültigen Einbaulage verschraubt oder verrastet werden.

Eine besonders wartungsfreundliche Ausbildung der Distanzhalterbaugruppe sieht vor, dass Crash-Anordnungen, umfassend Klammern und mit diesen zusammenwirkende Bolzen auf den in einander zugewandten Innenseiten der zueinander beabstandeten Distanzhalterteile angeordnet sind, sodass die Klammern und die Bolzen also außenseitig von den Körpern der Distanzhalterteile gegen Verschmutzung abgeschirmt werden.

Bei der bevorzugten Ausführungsform ist das Halteteil als Motor und das Anbauteil als Rahmen mit einem Fenster, besonders bevorzugt umfassend eine Luftklappensteuerung ausgebildet. Die Luftklappensteuerung ist im Wesentlichen ein rahmenartiges Bauteil, welches eine Vorderfläche definiert, wobei in dieser Vorderfläche eine von dem Rahmen umschlossene Öffnung oder ein Fenster ausgebildet ist, welche über verstellbare Klappen verschließbar und öffnenbar sein kann. Durch Einstellen der Klappen kann somit der Luftzustrom in einen dahinterliegenden Bereich reguliert werden, insbesondere in einen Motorraum, wozu die Luftklappensteuerung also einen wesentlichen Bauteil des Thermomanagements für den Motor realisiert.

Bevorzugt ist die KFZ-Baugruppe so ausgebildet, dass der Rahmen von oben oder von vorne montierbar ist.

Die Erfindung betrifft somit einen Distanzhalter zur relativbeweglichen Befestigung eines Anbauteils an einem im Wesentlichen stationären, als Halteteil fungierenden Bauteils an sich, insbesondere für den Einsatz in einem Kraftfahrzeug, z.B. einer Karosserie, einem Motor oder dergleichen, wobei dieser Distanzhalter zwei entlang einer Distanzhalterlängsachse zueinander relativbewegliche Distanzhalterteile umfasst, nämlich ein in Einbaulage innenliegendes Distanzhalterinnenteil, ausgebildet zur Befestigung an dem Halteteil, sowie ein in Einbaulage außen gelegenes Distanzhalteraußenteil, ausgebildet zur Befestigung an dem Anbauteil. Zwischen den Distanzhalterteilen ist eine sich entlang der Distanzhalterlängsachse ausgebildete Linienführung ausgebildet, entlang der die beiden Distanzhalterteile im Verhältnis zueinander verstellbar sind. Zwischen den Distanzhalterteilen wirkt eine Rückstellfeder, welche nach einer Krafteinwirkung einer Auslenkung entgegenwirkt.

Erfindungsgemäß sind die komplementären Distanzhalterteile teleskopartig ineinandergreifend ausgebildet und die Rückstellfeder ist zwischen den Distanzhalterteilen aufgenommen zur Bildung eines konzentrisch ausgebildeten, umschlossenen, teleskopartig längenverstellbaren Federsystems.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen.

In dieser Hinsicht wird Richtungsterminologie wie etwa "oben", "unten", "vorne", "hinten", "vorderes", "hinteres", usw. in Bezug auf die Orientierung der beschriebenen Figur (en) in Bezug auf den Motor verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen.

Ferner sollte verstanden werden, dass die Begriffe "etwa", "im Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Sämtliche Merkmale der jeweiligen Ausführungsbeispiele seien hierbei unabhängig voneinander auch allgemein im Rahmen der Erfindung offenbart. Es zeigen:
- Figur 1: eine isometrische Teilseitenansicht einer aus dem Stand der Technik bekannten KFZ-Baugruppe;
- Figur 2: eine isometrische Teilseitenansicht einer erfindungsgemäßen Kfz-Baugruppe (ohne Halteteil);
- Figur 3: eine vergrößerte Detail-Teildraufsicht der KFZ-Baugruppe gemäß Figur 2;
- Figur 4: eine Teilrückansicht der KFZ-Baugruppe gemäß Figur 3;
- Figur 5: einen Längsschnitt der KFZ-Baugruppe entlang der Linie C-C gemäß Figur 4 in der Grundstellung;
- Figur 6: einen Längsschnitt der KFZ-Baugruppe entlang der Linie C-C gemäß Figur 4 beim Unfall (Crash); und
- Figur 7: einen Längsschnitt der KFZ-Baugruppe entlang der Linie B-B gemäß Figur 4 beim Unfall (Crash) zum Verdeutlichen des Ausrastens.

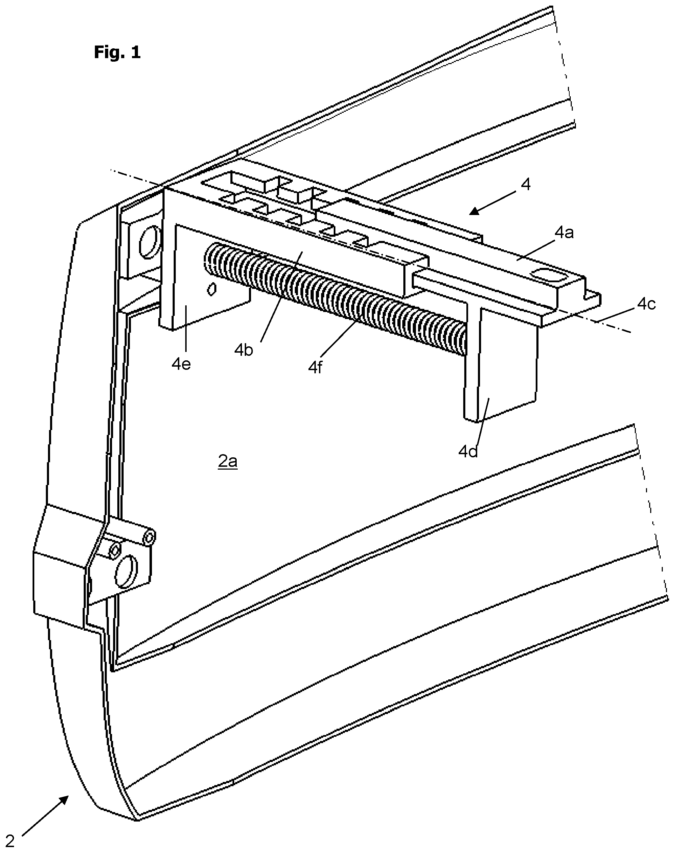

Figur 1 zeigt eine isometrische Seitenansicht einer KFZ-Baugruppe aus dem Stand der Technik ohne die als Halteteil fungierende Karosserie, also lediglich den als Rahmen 2 ausgebildete Anbauteil, welcher über mehrere Distanzhalter 4 an der nicht dargestellten Karosserie befestigt ist.

Der Rahmen umschließt bzw. definiert in diesem Fall ein Fenster 2a, das von außen sichtbar ist. In diesem Fenster sind nicht dargestellte Klappen drehbar aufgenommen, mit denen das Fenster wahlweise verschließ- und freigebbar ist für die Regelung der Luftzufuhr zu einem hinter dem Rahmen gelegenen Motorraum.

Der Distanzhalter 4 gemäß dem Stand der Technik umfasst ein mit der Karosserie innenseitig verschraubtes Distanzhalterinnenteil 4a, welches zusammen mit einem Distanzhalteraußenteil 4b eine längsverschieblich verstellbare Schwalbenschwanzführung bildet. Das Distanzhalteraußenteil 4b und das Distanzhalterinnenteil 4a sind jeweils außenseitig mit dem Rahmen 2 und innenseitig mit der Karosserie verschraubt. An einem sich quer zur Distanzhalterlängsachse 4c, welche sich durch die Mitte der Schwalbenschwanzführung zwischen dem Distanzhalterinnenteil 4a und dem Distanzhalteraußenteil 4b erstreckt, sind Querstege 4d, 4e ausgebildet, zwischen denen eine Rückstellfeder 4f angeordnet ist. Diese Rückstellfeder 4f stellt den Distanzhalter 4 nach einem Unfall (Crash) zurück in die Grundstellung oder in die Nähe der Grundstellung, beabstandet also die zunächst relativ aufeinander zugeschobenen Distanzhalterteile 4a, 4b wieder voneinander in die Nähe der Grundstellung.

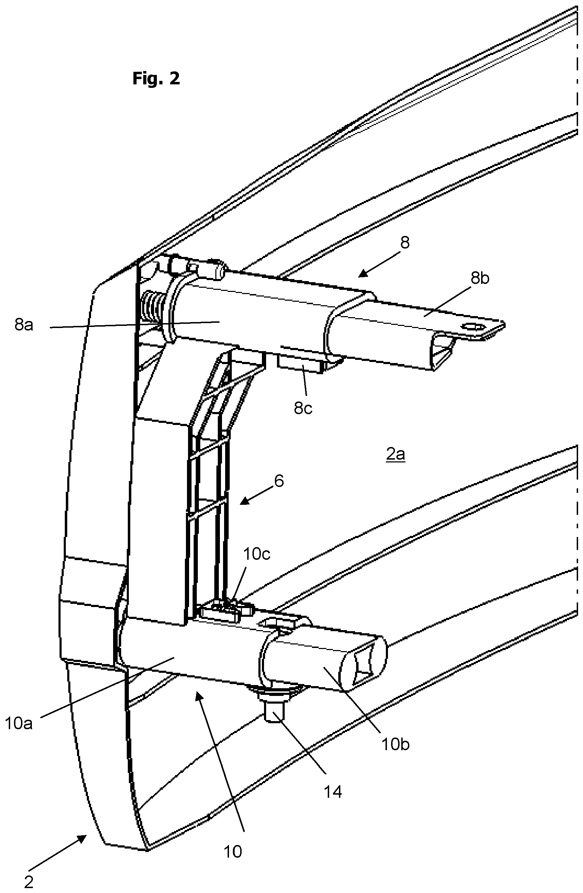

Figur 2 zeigt hingegen eine linksseitige isometrische Seitenansicht einer erfindungsgemäßen KFZ-Baugruppe ausgebildet als Distanzhalteranordnung mit zwei in Einbaulage übereinander angeordneten erfindungsgemäßen Distanzhaltern, die über eine Distanzhalterbrücke 6 miteinander verbunden sind.

Die Distanzhalterbrücke 6 umfasst einen oberen Distanzhalter 8 von einem in Einbaulage unteren Distanzhalter 10, die über die Distanzhalterbrücke 6 vertikal voneinander beabstandet und ober- und unterseitig an dem Rahmen innenseitig befestigt sind. Eine entsprechende Distanzhalterbrücke 6 ist am nicht dargestellten, gegenüberliegenden Ende des Rahmens 2, also an den beiden Stirnenden des Rahmen 2 befestigt.

Die mit dem Rahmen 2 verschraubten Distanzhalteraußenteile sind jeweils als mit dem Rahmen 2 verschraubte Führungshülsen 8a, 10a ausgebildet und vorzugsweise einstückig mit der Distanzhalterbrücke 6 ausgebildet. In den Führungshülsen 8a, 10a sind die als Führungselemente 8b, 10b ausgebildete Distanzhalterinnenteile längsverschieblich aufgenommen. Diese Führungselemente 8b, 10b weisen innenseitig jeweils äquidistant beabstandet von der mittigen Distanzhalterlängsachse Lo, Lu beabstandete, hohlzylindrische Federaufnahmen auf, in welche jeweils zwei Druckfedern 12 eingesetzt sind. Die Druckfedern 12 liegen mit ihrem hinteren Enden an dem inneren Ende der Führungselemente 8b, 10b und mit ihrem vorderen Enden in Federsitzen zur umschließenden Aufnahme der Vorderenden der Federn an dem Rahmen 2.

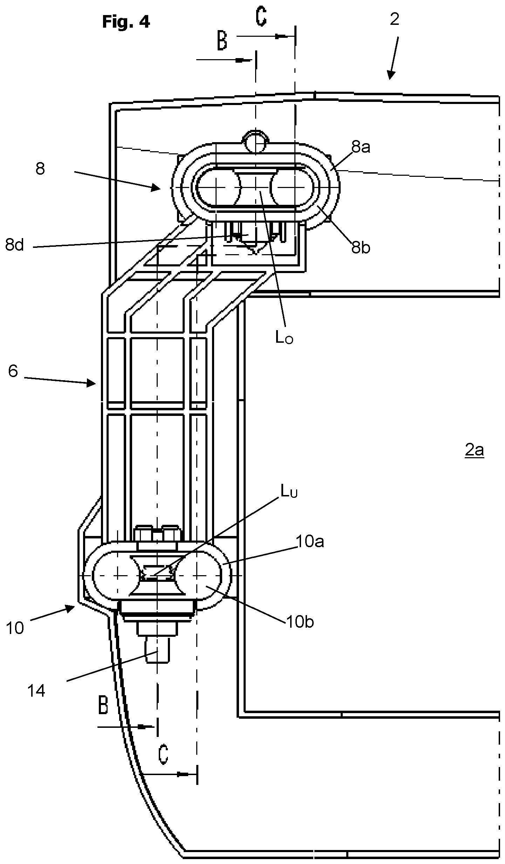

Wie die Rückansicht gemäß Figur 4 zeigt, sind die Distanzhalter 8, 10 in vertikaler Richtung versetzt voneinander angeordnet, sodass der untere Distanzhalter 10 weiter nach außen zum Außenrand des Rahmens 2 von dem oberen Distanzhalter 8 angeordnet ist, so dass die Mittellängsachsen L_{O}, L_{U} der Distanzhalter 8, 10 vertikal versetzt zueinander angeordnet sind, die obere Distanzhalterlängsachse L_{O} also weiter nach innen versetzt ist als die untere Distanzhalterlängsachse L_{U}.

Die Distanzhalterbrücke 6, die auch als Crash-Klammer bezeichnet wird, umfasst also vorliegend die Distanzhalterau-βenteile, die in diesem Beispiel ausgebildet sind als die Führungshülsen 8a, 10a. Jeder Distanzhalter 8,10 besteht aus jeweils einer in Einbaulage außenseitig in Bezug auf den Motor gelegenes Distanzhalteraußenteil ausgebildet als Führungshülse 8a, 10a in dem längsverschieblich, teleskopartig Führungselemente 8b,10b aufgenommen sind, welche sich parallel versetzt zu den Distanzhalterlängsachsen L_{O} L_{U} und voneinander beabstandete hohlzylindrische Aufnahmen für in der Führungselementen 8b, 10b aufgenommene Rückstellfedern 12 aufweist. So bilden die jeweils ein Distanzhalterinnen und ein Distanzhalterinnenteil umfassenden Distanzhalterteile ein geschlossenes System zur Aufnahme der Druckfedern.

In jedem Distanzhalter 8,10 sind also jeweils paarweise zwei horizontal nebeneinander beidseitig gleich weit beabstandet von der jeweiligen Distanzhalterlängsachse L_{U}, L_{O} angeordnete Rückstellfedern 12 aufgenommen, welche mit ihrem innenseitigen Ende an dem Führungselement 8b, 10b ausgebildeten, hohlzylindrischen Federaufnahmen sitzen und außenseitig in Federsitzen 2a an dem Halterahmen 2 anliegen, die vorliegend als zylindrische Einsätze ausgebildet sind.

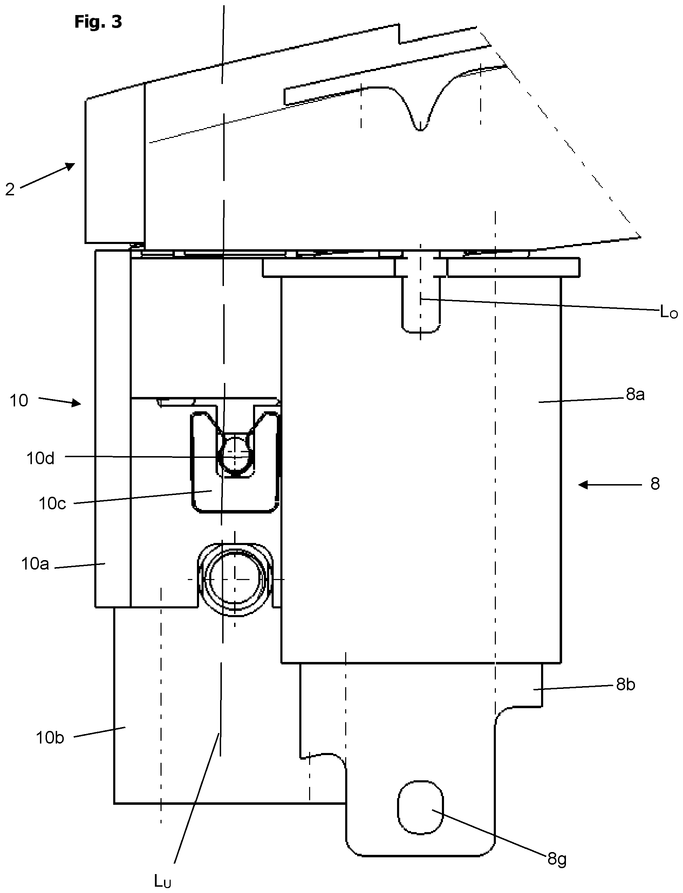

Figur 3 zeigt eine Draufsicht auf die Distanzhalterbrücke 6 mit dem oberen Distanzhalter 8 und dem unteren Distanzhalter 10. Auf den einander zugewandten Innenseiten der Distanzhalter 8, 10 sind als Crash-Klammern fungierende Klammern 8c, 10c einstückig an der Außenseite der oberen Führungshülse 8a und der unteren Führungshülse 10a angeformt, die mit an den äußeren Mantelflächen der Führungselemente 8b, 10b ausgebildeten Bolzen 8d, 10d zusammenwirken. Diese Bolzen 8d, 10d schnappen in der Grundstellung in innenseitig an den Längsschenkeln der Klammern 8c, 10c ausgebildete Rastvorsprünge ein und fixieren die Distanzhalterteile so in der Grundstellung. In dieser Grundstellung sind die Rückstellfedern 12 entweder völlig entlastet oder ganz gering belastet, was Funktionsfähigkeit erhält und Materialermüdungen vermeidet.

Auf den aufeinander zu gerichteten Innenseiten der Distanzhalter 8, 10 sind jeweils an den Führungshülsen 8a, 10a Klammern 8c, 10c ausgebildet, insbesondere einstückig angeformt, die einen dreiseitig geschlossenen, federnden Klammerbereich bilden, in den von einer Seite ein Bolzen 8d, 10d einrastbar ist, der mit dem jeweils komplementären anderen Distanzhalterteil, vorliegend also dem Führungselement 8b, 10b verbunden ist, konkret an der äußeren Mantelfläche abragend von dem Führungselement 8b, 10b angeformt ist.

Innenseitig zwischen den für Führungshülsen 8a, 10a und den Führungselementen 8b, 10b jeweils an dem aufeinander zu gerichteten Vorderende der Führungselemente 8b, 10b ein Anschlag 8f, 10f ausgebildet, der in einer innenseitigen, komplementär ausgebildeten Schulter in den Führungshülsen 8a, 10a, wenn die KFZ-Baugruppe in der Grundstellung ist, in welcher die Druckfedern 12 sich in Ruhestellung befinden und die Bolzen 8d, 10d die in den Klammern 8c, 10c fixiert sind. In das untere Ende des unteren Distanzhalters 10 ist ein Einsteckbolzen 14 eingeschraubt, der in eine entsprechende Öffnung an dem Motor bzw. der Karosserie im Rahmen der Montage einsteckbar ist. Nach dem Einsetzen dieses Einsteckbolzens 14 in den jeweiligen Fügepartner wird sodann die KFZ-Baugruppe einer an dem innenseitigen Ende der oberen Führungselemente 8b durch eine innenseitige Befestigungsöse 8g Oberseitig mit dem entsprechenden Halteteil (Karosserie oder Motor) verschraubt.

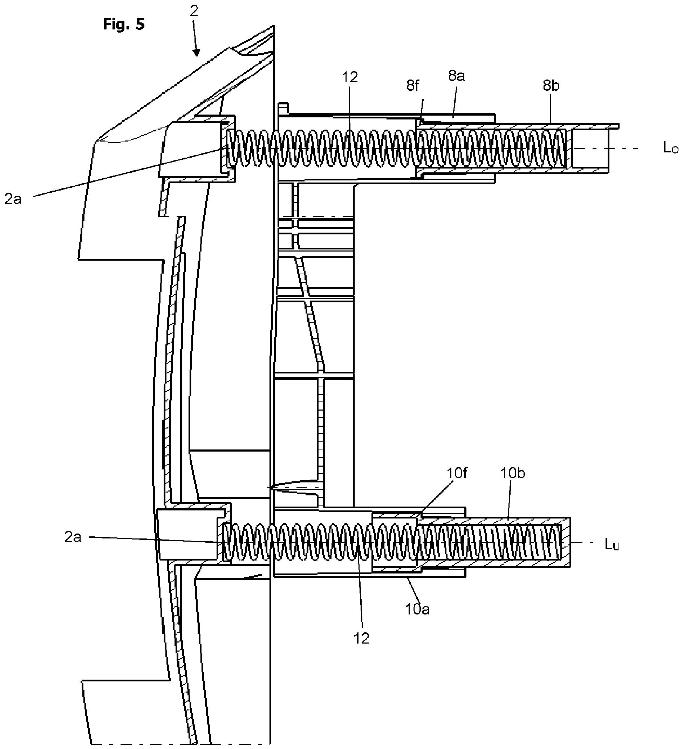

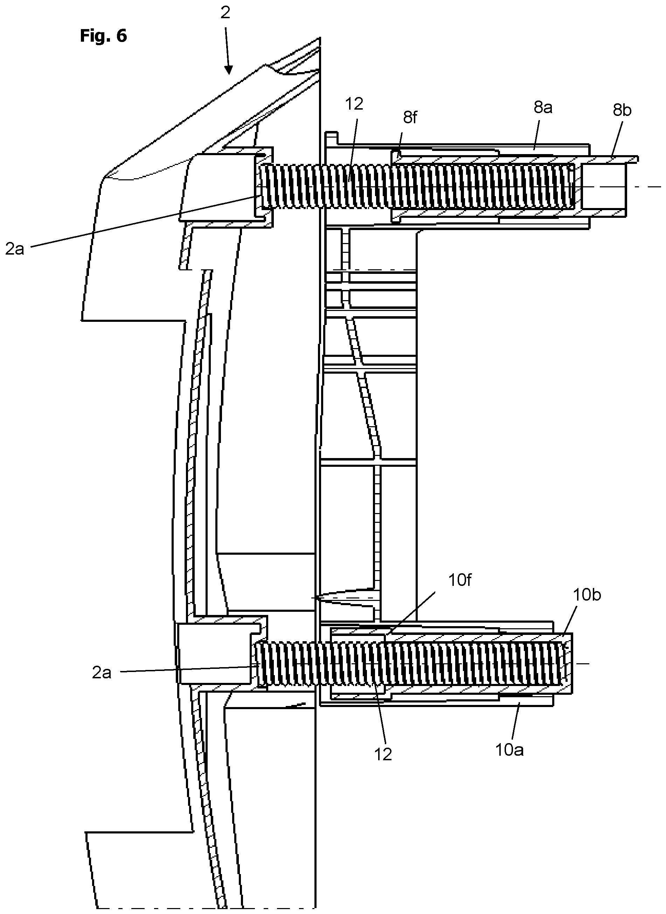

Figur 5 zeigt einen Längsschnitt entlang der Linie C-C gemäß Figur 4 der KFZ-Baugruppe in der Grund- bzw. Ruhestellung. Figur 6 zeigt hingegen den Längsschnitt der KFZ-Baugruppe entlang der Linie C-C gemäß Figur 4 beim Unfall bzw. Crash mit komprimierten Druckfedern 12, wobei die Anschläge 8f, 10f der Führungselemente 8b, 10b von den innenseitigen Schultern der Führungshülsen 8a, 10a beabstandet sind.

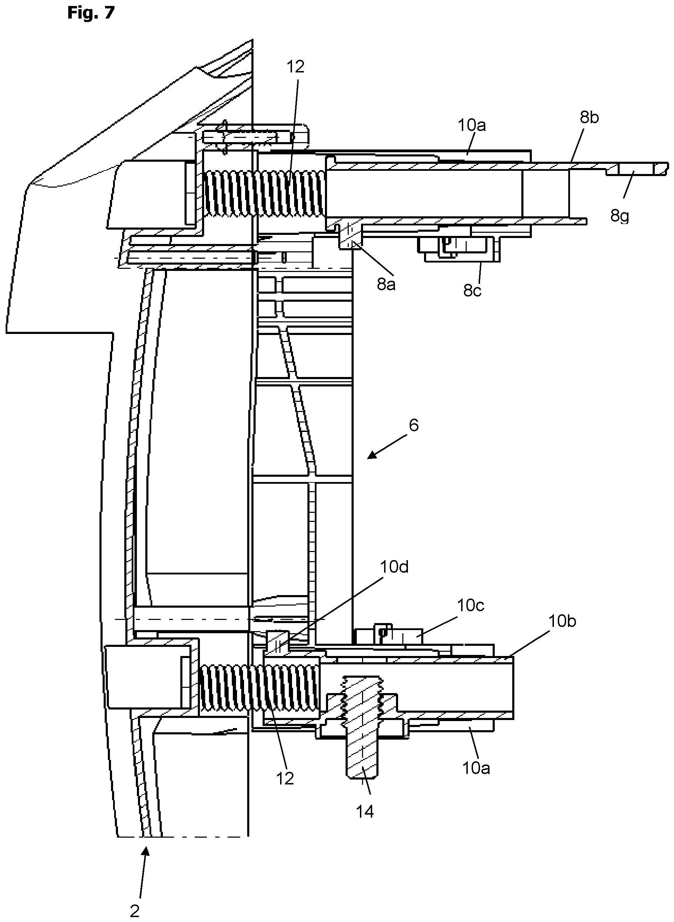

Die Figur 7 zeigt einen Längsschnitt entlang der Mittellängsachsen der Distanzhalter 8,10 entlang der Linie B-B gemäß Figur 4 beim Unfall bzw. Crash, wobei also die Bolzen 8d, 10d aus den Klammern 8c, 10c ausgerastet sind.

Der Gegenstand der vorliegenden Erfindung ergibt sich nicht nur aus dem Gegenstand der einzelnen Patentansprüche, sondern aus der Kombination der einzelnen Patentansprüche untereinander.

### Bezugszeichenliste

- 2: Rahmen
- 2a: Federsitz
- 4: Distanzhalter
- 4a: Distanzhalterinnenteil
- 4b: Distanzhalteraußenteil
- 4c: Distanzhalterlängsachse
- 4d,e: Quersteg
- 4f: Rückstellfeder
- 6: Distanzhalterbrücke
- 8: oberer Distanzhalter
- 8a: obere Führungshülse
- 8b: oberes Führungselement
- 8c: Klammer
- 8d: Bolzen
- 8f: Anschlag
- 8g: Befestigungsöse
- 10: unterer Distanzhalter
- 10a: untere Führungshülse
- 10b: unteres Führungselement
- 10c: Klammer
- 10d: Bolzen
- 10f: Anschlag
- 12: Rückstellfeder
- 14: Einsteckbolzen
- L_{O}: obere Distanzhalterlängsachse
- L_{U}: untere Distanzhalterlängsachse

## Patentansprüche

1. Distanzhalter (8, 10) zur relativbeweglichen Befestigung eines Anbauteils an einem im Wesentlichen stationären, als Halteteil fungierenden Bauteil eines KFZ, z.B. einer Karosserie, einem Motor oder dergleichen, wobei der Distanzhalter das Anbauteil in einer Grundstellung beabstandet zu dem stationären Halteteil fixiert und durch eine Krafteinwirkung in eine von der Grundstellung verschiedene Auslenkung überführbar ist, die näher an dem stationären Halteteil gelegen ist, wobei der Distanzhalter (8, 10) mindestens zwei zueinander relativbewegliche Distanzhalterteile umfasst, nämlich ein in Einbaulage innen liegendes Distanzhalterinnenteil ausgebildet zur Befestigung an dem Halteteil sowie ein in Einbaulage außen gelegenes Distanzhalteraußenteil ausgebildet zur Befestigung an dem Anbauteil, wobei die Distanzhalterteile entlang einer gemeinsamen Distanzhalterlängsachse, vorzugsweise ausgebildet als Linienführung im Verhältnis zueinander verstellbar sind, und wobei zwischen den Distanzhalterteilen eine Rückstellfeder (12) angeordnet ist, welche nach der Krafteinwirkung der Auslenkung entgegenwirkt, **DADURCH GEKENNZEICHNET, DASS** die Distanzhalterteile teleskopartig ineinander greifen, und dass die Rückstellfeder in den Distanzhalterteilen aufgenommen ist zur Bildung eines umschlossenen, teleskopartig längenverstellbaren Federsystems.

2. Distanzhalter (8, 10) nach Anspruch 1, **DADURCH GEKENNZEICHNET, DASS** die mindestens zwei Rückstellfedern (12) der Federanordnung gleich weit beabstandet von einer sich zwischen den Federlängsachsen erstreckenden Distanzhalterlängsachse (L_{O}, L_{U}) angeordnet sind.

3. Distanzhalter (8, 10) nach Anspruch 1 oder 2, **DADURCH GEKENNZEICHNET, DASS** die mindestens zwei Rückstellfedern (12) auf einer horizontalen Ebene durch die Distanzhalterlängsachse (L_{O}, L_{U}) erstreckend in Einbaulage nebeneinander angeordnet sind.

4. Distanzhalter (8, 10) nach einem der Ansprüche 1 bis 3, **DADURCH GEKENNZEICHNET, DASS** das Distanzhalterinnenteil als Einsteckteil und das Distanzhalteraußenteil als Führungshülse (8a, 10a) bzw. Aufnahmeteil ausgebildet ist, und dass das Distanzhalterinnenteil längsverschieblich in dem Distanzhalteraußenteil aufgenommen ist.

5. Distanzhalter (8, 10) nach einem der Ansprüche 1 bis 4, **DADURCH GEKENNZEICHNET, DASS** das Distanzhalterinnenteil zumindest teilweise zur Aufnahme der mindestens einen Rückstellfeder (12) ausgebildet ist.

6. Distanzhalter (8, 10) nach einem der vorgehenden Ansprüche, **DADURCH GEKENNZEICHNET, DASS** zwischen den Distanzhalterteilen ein Anschlag (8f, 10f) ausgebildet ist.

7. Distanzhalter (8, 10) nach einem der vorhergehenden Ansprüche, **DADURCH GEKENNZEICHNET, DASS** das Distanzhalterinnenteil und das Distanzhalterausenteil dämpfend und/oder schwimmend ausgebildet sind.

8. Distanzhalter (8, 10) nach einem der Ansprüche 1 bis 7, **DADURCH GEKENNZEICHNET, DASS** an den komplementären Distanzhalterteilen eine Klammer (8c, 10c) mit einem komplementären Bolzen (8d, 10d) ausgebildet ist, also einem Distanzhalterteil eine Klammer (8c, 10c) und an dem komplementären anderen Distanzhalterteil ein mit der Klammer (8c, 10c) in der Grundstellung zusammenwirkender Bolzen (8d, 10d).

9. Distanzhalter (8, 10) nach Anspruch 8, **DADURCH GEKENNZEICHNET, DASS** die Klammer (8c, 10c) und/oder der Bolzen (8d, 10d) so gestaltet sind, dass für das Ausrasten (Ausrastkraft) eine höhere Kraft erforderlich ist als für das Wiedereinführen des Bolzens (Einrastkraft) in die Klammer nach einem Unfall.

10. Distanzhalter (8, 10) nach Anspruch 9, **DADURCH GEKENNZEICHNET, DASS** zwischen Klammer (8c, 8d) und Bolzen (8d, 10d) in Fügerichtung wirkende Auflaufschrägen, eine Abflachung oder dergleichen ausgebildet sind.

11. KFZ-Baugruppe mit einem Distanzhalter nach einem der Ansprüche 1-10,
**DADURCH GEKENNZEICHNET, DASS** die oberen Distanzhalterinnenteile eine Befestigungsöse (8g) ausgebildet zum Verschrauben mit dem stationären Bauteil umfassen und dass die unteren Distanzhalterteile ein Einsteckteil, insbesondere ausgebildet als Schraube (14), zum Einstecken in das Halteteil umfassen.

12. KFZ-Baugruppe nach Anspruch 11,
**DADURCH GEKENNZEICHNET, DASS** das Einstecksteil einen Einsteckbolzen (14) umfasst.

13. Montagverfahren für eine KFZ-Baugruppe wobei ein Anbauteil in Verhältnis zur einem Halteteil über Zwischenschaltung von mindestens einem Distanzhalter beabstandet und relativbeweglich entlang einer Distanzhalterlängerachse (L_{O}, L_{U}) gehalten wird, **DADURCH GEKENNZEICHNET, DASS** die in Einbaulage unten gelegene Distanzhalterteile ein mit dem Halteteil verbindbares Einsteckteil zum Einstecken in das Halteteil umfasst und am oberen Ende bzw. an den in Einbaulage oben gelegenen Distanzhalterinnenteilen ein Befestigungsauge, eine Befestigungslasche oder dergleichen ausgebildet ist, mit welchen das obere Distanzhalterinnenteil in Einbaulage auf das Halteteil aufgeschappt, verastet oder wird oder mit diesem verschraubt wird.

## Claims

1. Spacer (8, 10) for the relatively movable securing of an attachment to a substantially stationary component of a motor vehicle, e.g. a body, an engine or the like, acting as a holding part, wherein the spacer fixes the attachment in a basic position spaced apart from the stationary holding part and by the action of a force can be deflected into a position differing from the basic position that is located closer to the stationary holding part, wherein the spacer (8, 10) comprises at least two spacer parts that can be moved relative to one another, namely an inner spacer part that is located on the inside in the installation position and is formed for securing to the holding part and an outer spacer part that is located on the outside in the installation position and is formed for securing to the attachment and an outer spacer part which is located on the outside in the installation position and is formed for securing to the attachment part, wherein the spacer parts are adjustable in relation to one another along a common longitudinal spacer axis, preferably in the form of a line guide, and wherein a return spring (12) is arranged between the spacer parts, which spring counteracts the deflection after the application of force, **CHARACTERISED IN THAT** the spacer parts engage telescopically in one another, and **in that** the return spring is received in the spacer parts to form an enclosed, telescopic longitudinally-adjustable spring system.

2. Spacer (8, 10) according to claim 1, **CHARACTERISED IN THAT** the at least two return springs (12) of the spring arrangement are equally spaced from a spacer longitudinal axis (Lₒ, L_{U}) extending between the spring longitudinal axes.

3. Spacer (8, 10) according to claim 1 or 2, **CHARACTERISED IN THAT** the at least two return springs (12) are arranged in installation position side-by-side on a horizontal plane extending through the spacer longitudinal axis (Lₒ, Lu).

4. Spacer (8, 10) according to any one of claims 1 to 3, **CHARACTERISED IN THAT** the spacer inner part is formed as insertion part and the spacer outer part is formed as guide sleeve (8a, 10a) or receiving part, and **in that** the spacer inner part is received in the spacer outer part in a longitudinally displaceable manner.

5. Spacer (8, 10) according to any one of claims 1 to 4, **CHARACTERISED IN THAT** the spacer inner part is formed to at least partially receive the at least one return spring (12).

6. Spacer (8, 10) according to any one of the preceding claims, **CHARACTERISED IN THAT** a stop (8f, 10f) is formed between the spacer parts.

7. Spacer (8, 10) according to any one of the preceding claims, **CHARACTERISED IN THAT** the spacer inner part and the spacer outer part are formed to be damping and/or floating.

8. Spacer (8, 10) according to any one of claims 1 to 7, **CHARACTERISED IN THAT** a clip (8c, 10c) with a complementary pin (8d, 10d) is formed on the complementary spacer parts, i.e. a clip (8c, 10c) on one spacer part and a pin (8d, 10d) cooperating with the clip (8c, 10c) in the basic position on the complementary other spacer part.

9. Spacer (8, 10) according to claim 8, **CHARACTERISED IN THAT** the clip (8c, 10c) and/or the pin (8d, 10d) are configured such that a higher force is required for disengagement (disengagement force) than for reinsertion of the pin (engagement force) into the clip after an accident.

10. Spacer (8, 10) according to claim 9, **CHARACTERISED IN THAT** between clamp (8c, 8d) and pin (8d, 10d) there are formed run-up bevels, a flat section or the like acting in the joining direction.

11. Motor vehicle assembly comprising a spacer according to any one of claims 1-10,
**CHARACTERISED IN THAT** the upper spacer inner parts comprise a securing eyelet (8g) formed for threaded connection with the stationary component and **in that** the lower spacer parts comprise an insertion part, in particular formed as a bolt (14), for insertion into the holding part.

12. Motor vehicle assembly according to claim 11,
**CHARACTERISED IN THAT** the insertion part comprises an insertion pin (14).

13. Assembly method for a motor vehicle assembly, wherein an attachment is held at a spacing from a holding part so as to be relatively movable along a spacer extension axis (Lₒ, L_{U}) via the interposition of at least one spacer, **CHARACTERISED IN THAT** the spacer parts lying below in the installation position comprises an insertion part that can be connected to the holding part for insertion into the holding part, and at the upper end or on the spacer inner parts lying above in the installation position a securing eye, a securing lug or the like is formed, with which in the installation position the upper spacer inner part is snapped, latched or onto the holding part or is screwed onto the latter.

## Revendications

1. Écarteur (8,10) pour la fixation relativement mobile d'une pièce de montage sur un élément servant de pièce de maintien sensiblement immobile d'un véhicule automobile, p. ex. une carrosserie, un moteur ou similaire, dans lequel l'écarteur fixe la pièce de montage dans une position initiale espacée de la pièce de maintien immobile et peut être transféré par l'action d'une force dans une déviation différente de la position initiale, qui se situe plus près de la pièce de maintien immobile, dans lequel l'écarteur (8, 10) comprend au moins deux parties d'écarteur relativement mobiles l'une par rapport à l'autre, notamment une partie intérieure d'écarteur située à l'intérieur dans la position de montage conçue pour la fixation à la pièce de maintien, ainsi qu'une partie extérieure d'écarteur située à l'extérieur dans la position de montage conçue pour la fixation sur la pièce de montage, dans lequel les parties d'écarteur peuvent être réglées l'une par rapport à l'autre le long d'un axe longitudinal d'écarteur commun, de préférence conçu comme un tracé, et dans lequel un ressort de rappel (12) est disposé entre les parties d'écarteur, lequel contrecarre la déviation après l'action d'une force, **CARACTÉRISÉ EN CE QUE** les parties d'écarteur entrent en prise l'une dans l'autre de manière téléscopique, et **en ce que** le ressort de rappel est logé dans les parties d'écarteur pour former un système de ressorts fermé réglable en longueur de manière télescopique.

2. Écarteur (8, 10) selon la revendication 1, **CARACTÉRISÉ EN CE QUE** les au moins deux ressorts de rappel (12) de l'agencement de ressorts sont disposés de manière équidistante par rapport à un axe longitudinal d'écarteur (Lₒ, Lu) s'étendant entre les axes longitudinaux des ressorts.

3. Écarteur (8, 10) selon la revendication 1 ou 2, **CARACTÉRISÉ EN CE QUE** les au moins deux ressorts de rappel (12) sont disposés côte à côte dans la position de montage s'étendant sur un plan horizontal passant par l'axe longitudinal d'écarteur (Lₒ, Lu).

4. Écarteur (8, 10) selon l'une quelconque des revendications 1 à 3, **CARACTÉRISÉ EN CE QUE** la partie intérieure d'écarteur est conçue comme pièce enfichable et la partie extérieure d'écarteur comme douille de guidage (8a, 10a) ou partie de logement, et **en ce que** la partie intérieure d'écarteur est logée de manière à se déplacer longitudinalement dans la partie extérieure d'écarteur.

5. Écarteur (8, 10) selon l'une quelconque des revendications 1 à 4, **CARACTÉRISÉ EN CE QUE** la partie intérieure d'écarteur est conçue au moins partiellement pour le logement d'au moins un ressort de rappel (12).

6. Écarteur (8, 10) selon l'une quelconque des revendications précédentes, **CARACTÉRISÉ EN CE QU'**une butée (8f, 10f) est conçue entre les parties d'écarteur.

7. Écarteur (8, 10) selon l'une quelconque des revendications précédentes, **CARACTÉRISÉ EN CE QUE** la partie intérieure d'écarteur et la partie extérieure d'écarteur sont conçues de manière à amortir et/ou à flotter.

8. Écarteur (8, 10) selon l'une quelconque des revendications 1 à 7, **CARACTÉRISÉ EN CE QU'**une pince (8c, 10c) munie d'un boulon (8d, 10d) complémentaire est conçue sur les parties d'écarteur complémentaires, c'est-à-dire une pince (8c, 10c) sur une partie d'écarteur et un boulon (8d, 10d) coopérant avec la pince (8c, 10c) dans la position initiale sur l'autre partie d'écarteur complémentaire.

9. Écarteur (8, 10) selon la revendication 8, **CARACTÉRISÉ EN CE QUE** la pince (8c, 10c) et/ou le boulon (8d, 10d) sont agencés de telle manière qu'une force plus élevée est nécessaire pour le dégagement (force de dégagement) que pour la réintroduction du boulon (force d'engagement) dans la pince après un accident.

10. Écarteur (8, 10) selon la revendication 9, **CARACTÉRISÉ EN CE QU'** entre les pinces (8c, 8d) et les boulons (8d, 10d) sont conçus des chanfreins inclinés fonctionnant dans la direction d'assemblage, un aplatissement ou similaires.

11. Module de véhicule automobile équipé d'un écarteur selon l'une quelconque des revendications 1-10,
**CARACTÉRISÉ EN CE QUE** les parties intérieures d'écarteur supérieures comprennent un point d'attache (8g) conçu pour le vissage avec l'élément immobile et **en ce que** les parties d'écarteur inférieures comprennent une pièce enfichable, en particulier conçue comme une vis (14), à enficher dans la pièce de maintien.

12. Module de véhicule automobile selon la revendication 11,
**CARACTÉRISÉ EN CE QUE** la pièce enfichable comprend un boulon à enficher (14).

13. Procédé de montage pour un module de véhicule automobile dans lequel une pièce de montage est espacée par rapport à une pièce de maintien par l'intermédiaire d'au moins un écarteur et est maintenue de manière relativement immobile le long d'un axe longitudinal d'écarteur (Lₒ, L_{U}), **CARACTÉRISÉ EN CE QUE** les parties d'écarteur situées en bas de la position de montage comprend une pièce enfichable pouvant être reliée à la pièce de maintien pour être enfichée dans la pièce de maintien et au niveau de l'extrémité supérieure ou au niveau des parties intérieures d'écarteur situées en haut de la position de montage est conçu un oeillet de fixation, une bride de fixation ou similaires, avec lequel(laquelle) la partie intérieure d'écarteur supérieure est encliquetée, enclenchée ou vissée à ce celui-ci(celle-ci) dans la position de montage sur la pièce de maintien.
